# EUROPEAN PATENT SPECIFICATION

(11) **EP 4 678 319 B1**
(45) Date of publication and mention of the grant of the patent: **02.09.2026**
(21) Application number: 24187381.9
(22) Date of filing: 09.07.2024
(51) Int. Cl.: B23D 57/00, B28D 5/00, B28D 5/04

(54) **METHOD FOR OPERATING A WIRE SAW**
VERFAHREN ZUM BETREIBEN EINER DRAHTSÄGE
PROCÉDÉ DE FONCTIONNEMENT D'UNE SCIE À FIL

(43) Date of publication of application: 14.01.2026
(73) Proprietor: Lapmaster Wolters GmbH, 24768 Rendsburg (DE)
(72) Inventor: Lauper, Simon, 3645 Gwatt (Thun) (CH); König, Andreas, 3645 Gwatt (Thun) (CH)
(74) Representative: Lohr, Jöstingmeier & Partner Patent- und Rechtsanwälte mbB

(56) References cited:
- CN-B- 112 454 700
- JP-A- H08 300 345

## Description

### Field of the invention

The invention relates to the operation of wire saws, as used for slicing semiconductor ingots and to a wire saw. In more detail the invention relates to a method for operating a wire saw having a wire for cutting a workpiece and a wire drive for moving at least a section of the wire relative to the workpiece. The method may further comprise at least one of the following steps:
(i) a ramp-up step of duration *Tₐ* starting at *t*₀ and ending at *tₐ*, comprising: powering the wire drive with a power *P*(*t*) to accelerate at least a section of the wire with an acceleration *a*(*t*) in an axial direction of the wire and relative to the workpiece, wherein t symbolizes the time,
(ii) a normal-operation step of duration *Tₙ*, comprising: maintaining an axial speed *vₙ* of at least the section of the wire relative to the workpiece constant within a given error margin of at least 10% of the axial speed *vₙ* ,i.e., the error margin is ±0.1 · *vₙ.*
(iii) a stopping step of duration *Tₛ,* comprising: slowing at least the section of the wire down until at least the section of the wire is halted.

### Description of the related art

Wire saws are commonly used for slicing semiconductor ingots into thin wafers or slices in various industries, particularly in the semiconductor and solar industries. Ingot slicing is a crucial step in the production of silicon wafers, which are used in the manufacturing of electronic devices like integrated circuits (ICs) and photovoltaic cells.

CN112454700B discloses a multi-slicer system and a control method.

JP H08300345 A relates to a method for supplying electric power to a wire saw.

Wire saws use a thin wire to cut through the workpiece. Abrasive particles may have been attached to the peripheral surface of the wire to enhance the cutting process. In addition or alternatively, a cutting fluid that adheres to the wire may be used. The wire is supported by a series of grooves on essentially parallel drums and hence forms a number of parallel arranged slits between parallel sections of the wire. During the slicing process, the wire reciprocates, i.e., the steps of moving the wire in a forward direction and subsequently moving the wire in a backward direction are iterated. This discontinuous cutting process has the drawback that each time the direction of the wire and hence the direction the of drums are inverted, the power consumption of prior art wire saws peaks during a ramp-up phase of accelerating the wire to an intended speed. The grid supplying the wire saw, i.e., the backbone of the manufacturing facility has to be dimensioned accordingly, being costly. When operating multiple wire saws at the same manufacturing facility these peaks may superposition, requiring a further increase in cost of investment for providing the required grid. It has been suggested to reduce these costs by providing a central controller that controls the points in time when direction of the multiple wires of the wire saws of a wire saw farm are inverted, thereby by artificially offsetting the peaks in the power consumption of different wire saws.

### Summary of the invention

The invention is based on the observation that a central control unit for desyn-chronizing the points in time when the direction of the wires of multiple wire saws is inverted is costly as well and introduces a single point of failure into the system of elsewise independently operating wire saws. Further, the desynchronization has shown to slow the slicing processes down as idle times are non-negligible and as well to affect the quality of the cut workpieces (e.g. the wavers) negatively.

Solutions of the problem are described in the independent claims. The dependent claims relate to advantageous embodiments of the invention.

In an embodiment, the solution is a method for operating a wire saw. In another embodiment, the solution is a wire saw configured to execute the method.

The wire saw may comprise a wire drive configured to move at least a section of the wire relative to the workpiece. For example, the workpiece may be a semiconductor ingot.

In practice, the wire saw is delivered by the manufacturer without the wire and the customer mounts the wire as required by the particular application. These wire saws may have a support structure supporting at least two (usually three or four) optional drums configured to support a wire. These optional drums and an optional pulley system are configured to guide the wire from a source spool, e.g., via the optional drum and/or the optional pulleys, to a second spool on which used wire is stored (used wire spool). The source spool and the used wire spool are preferably supported by a source spool holder and a used spool holder, respectively. Summarizing, the wire saw may comprise at least a support structure, at least one workpiece holder, at least one source spool holder and at least one used wire spool holder and a wire drive. The source spool holder and at the least one used wire spool holder are preferably configured for receiving a source spool and a used wire spool, respectively.

The optional support structure may further support the workpiece holder and a wire drive. The wire drive may be configured to drive a wire extending between the source spool and the used wire spool, e.g., via a wire guide system. Hence, the wire guide system may be comprised by the wire saw. The wire guide system may comprise, e.g., said optional drums and/or optional pulleys, or other wire guide means.

The wire guide may be configured to support a wire fence, i.e. a grid of at least essentially parallel sections of the wire. This wire guide may be driven by the wire drive. The wire drive may comprise at least one electric motor configured for driving the wire drive, e.g. the optional drums, optional pulleys, optional spools, etc. forming the wire drive. In an example, the wire drive may comprise at least one electrical motor, being coupled by any kind of transmission to at least one of components of the wire drive, e.g. to the drums and/spools and/or pulleys. For example, the transmission may couple the drums to the at least one electrical motor. In another example, at least one electric motor may be integrated into a drum and/or a spool holder. In the context of the present invention, it is not relevant how many electrical motors are used to drive the wire drive and hence the wire guide or how the at least one electrical motor drives the wire guide (e.g., directly or via a transmission). Many suggestions are known in the art, and these may generally be used. Herein, we focus on the power consumption of the wire drive, i.e., the power consumption required for moving a section of the wire from the source spool to the used wire spool or back from the used wire spool to the source spool while slicing a workpiece as the direction may be. The wire saw may be delivered without these spools but will nevertheless preferably have a wire drive preferably with a corresponding set of spool holders being configured to receive the spools and to drive them.

Summarizing, in a preferred example, the method addresses operation of one or more wire saws each having a wire for cutting a workpiece and a wire drive for moving at least a section of the wire relative to the workpiece. According to the invention, the method comprises the following steps of:
(a) Assigning a reduced maximal power (*P_{i,max}*) to at least one of the wire saws, preferably to multiple of the wire saws, particularly preferred to all of the one or more wire saws, and
(b) Operating at least said at least one of the wires saws so that the power *Pᵢ*(*t*) being provided to its wire drive does not supersede its assigned reduced maximal power *P_{i,max}.* This can be summarized as *Pᵢ*(*t*) ≤ *P_{i,max}*∀*t.* Preferably multiple of the wire saws are operated accordingly, particularly all of the one or more wire saws are controlled so that the power *Pᵢ*(t) being provided to the wire drive of the *i^{th}* wire saw does not supersede its assigned reduced maximal power *P_{i,max}.*

The step of operating of the at least one wire saw may comprise and/or consist of controlling the respective wire saw, e.g. by a controller being configured to execute respective method step. In particular, the controller may be configured to drive the wire drive so that its assigned reduced maximal power *P_{i,max}* is not exceeded. Example the controller may be configured to control the power *Pᵢ*(*t*) of the *i^{th}* wire saw to maintain *Pᵢ*(*t*) ≤ *P_{i,max}.* Each wire saw of the set of wire saws may be operated by a separate controller. Alternatively, all or a subset of the wire saws may be operated (i.e. controlled) by a single controller operating at least two of the wire saws.

It is noted that the reduced maximum power *P_{i,max}* is below the maximum nominal power of the wire saw. Generally, the total power consumption of the wire saw is important, but herein we focus essentially on the power consumption of the wire drive. Hence, if one neglects the other power consuming parts or subsystems of the wire saw (e.g. the coolant pump, controller, etc.), in a simplifying convention one may assume that the reduced maximum power *P_{i,max}* is below the nominal maximum power consumption of the wire drive. In this simplifying convention, the wire drive is controlled and/or operated in a manner that the power provided to the wire drive is at or below the reduced maximum power *P_{i,max}* , wherein the reduced maximum power *P_{i,max}* is below the nominal maximum power of the wire drive of the *i^{th}*-wire saw.

As usual t denotes the time. As apparent, the index *i* designates an *i^{th}* wire saw of a set of *N* wire saws, i.e. of the of one or more wire saws (hence *i* is a natural number). Assuming *N* to be the number of the wire saws being controlled and/or operated according to the method, this means that *i* ≤ *N* and *N* ≥ 1. There is no theoretic upper limit for *N,* but in case we would have to define an upper limit for legal purposes, one may assume that *N* ≤ *Nₘₐₓ* and that *Nₘₐₓ E* {10², 10³, 10⁶, 10⁹}, i.e. *Nₘₐₓ* may be selected to be one of 10², 10³, 10⁶ or , 10⁹.

The index *i* is omitted herein, if no distinction between two wire saws is required (although possible), in this sense *P*(*t*) *= Pᵢ*(*t*). It is noted that the index *i* could of course be added for formalistic consistency. The technical effect of reducing the maximum grid load is obtained already if only a single wire saw is controlled as described herein, and hence the index *i* becomes 1 (*i* = 1) and can be omitted. But of course, it is preferred that more than one wire saw is controlled as described herein, preferably at least a subset of all wire saws of a manufacturing plant are controlled as described herein. Of course, it is preferred if all wire saws of the manufacturing plant are controlled and/or operated as described herein. Preferably, in step (b) the motion of the wire may be controlled in other to delimit the actually provided power *Pᵢ*(*t*) of the *i^{th}* wire drive to be below the maximum power *P_{i,max}* (under the above given simplifying convention of neglecting other power drains of the wire saw), preferably by controlling the speed and/or acceleration of the wire, which can be obtained by controlling the wire drive accordingly.

The method may, in a preferred example, further comprise the step of defining a maximal total power (*P_{tot,max}*) that can be used by all wire saws of the set of one or more wire saws. The individual maximum powers *P_{i,max}* may then be chosen so that the total sum of all *N* individual maximum powers ${\sum }_{i = 1}^{N} {P}_{i , max}$ of the *N* wire saws remains below that maximal total power, i.e. ${\sum }_{i = 1}^{N} {P}_{i , max} \leq {P}_{tot , max}$.

This step is preferably executed prior to step (a).

Generally, the method for operating a wire saw of the set of *N* wire saws may preferably comprise a ramp-up step of duration *Tₐ*. During the ramp-up step at least a section of the wire is accelerated by an *i^{th}* wire drive (1 ≤ *i* ≤ *N, N* ≥ 1, N integer) to an intended (e.g. predefined) speed as required for cutting the workpiece. The ramp-up step ends when the intended speed has been reached. The duration *Tₐ* starts at *t*₀ and ends at *tₐ*. During the ramp-up step, the *i^{th} -* wire drive (e.g. at least one motor of the wire drive) may be powered with a power *Pᵢ*(*t*), wherein *t* is a point in time. During the ramp-up step, the provided power *Pᵢ*(*t*) may be converted by the *i^{th}* wire drive into an acceleration *a̅ᵢ*(*t*) *= a̅ᵢ*(*Pᵢ*(*t*)) of at least a section of the wire. This acceleration is a vector, but herein we simplify it to a scalar *aᵢ*(*t*), as only the acceleration parallel to the longitudinal direction of the (assumed straight) wire is relevant. Unless explicitly mentioned, the direction (forward or backwards) is as well not relevant herein. In practical applications, the wire may be guided by pulleys and/or drums as explained above, but in any case, the wire moves relative to the workpiece holder in a first direction or in the direction being opposite to the first direction (i.e. a second direction). Relevant is the speed and acceleration of the portion(s) of the wire that is (are) configured to slice through the workpiece during operation of the wire saw. This speed is herein referred to as axial speed *v̅ᵢ*(*t*) *= vᵢ*(*t*) (speed for short) the time derivative thereof is the axial acceleration $\frac{\partial }{\partial t} {\vec{v}}_{i} \left(t\right) =$ *a̅ᵢ*(*t*) *= aᵢ*(*t*) *= aᵢ*(*Pᵢ*(*t*)) (acceleration for short). To simplify the description, we herein assume, unless explicitly mentioned, that the acceleration of the *i^{th}* wire due to the provided power *Pᵢ*(*t*) is always positive during the ramp up step, regardless of the direction of the acceleration (using pseudo c++ syntax, one may write this as *aᵢ*(*t*) := |*aᵢ*(*t*)| and hence *vᵢ*(*t*) := |*vᵢ*(*t*)|, unless explicitly mentioned as usual := is the assignment operator and |*vᵢ*(*t*)| denotes the absolute value of *v*(*t*), or in short |*vᵢ*(*t*)| :*= Abs*(*vᵢ*(*t*))). Below the index i will mostly be omitted, for brevity, only, but of course could be added for formalistic consistency.

The method may further comprise a normal-operation step of duration *Tₙ*. The normal-operation step may include maintaining an axial speed *v_{i,n}* of at least the section of the wire slicing through the workpiece constant within a given error margin of 25% or better. In other words, the error margin may be ±*ε* · *v_{i,n}*, wherein *ε* ∈ {0.25, 0.2, 0.1, 0.5, 0.1. 0.05, 0.025, 0.01, 0}. As usual, smaller error margins are preferred. Summarizing, the normal-operation step may include controlling and/or operating the wire drive to maintain the wire at an at least essentially constant speed |*vᵢ*(*t*)|, i.e. constant within the error margin. This means that *vᵢ*(*t*)| ∈ [|*vₙ*| · (1 - *ε*); |*vₙ*| · (1 + *ε*].

During the normal-operation step, a section of the wire may be transferred from the source spool to the used wire spool with an absolute speed of at least essentially *vᵢ*|(*t*)| In the forward direction the speed (*t*) may be rewritten as *vᵢ*(*t*) = *vₙ* · (1 ± *ε*)) and in the backward direction the speed *v*(*t*) may be rewritten as (*v*(*t*) = *-vₙ* · (1 ± *ε*). Herein forward means that the *i^{th}* -wire is spooled from the source spool to the used wire spool and backward that the wire is spooled from the used wire spool to the source spool, i.e. the sign of *v(t)* may alter from a normal-operation step to a another normal-operation step. During these normal-operation steps the majority of the cutting takes place. The speeds and accelerations may be different for different wire saws and the index *i* could be added to the acceleration and the speed, but these indices are omitted for brevity as indicated above.

After the normal-operation step, the method may preferably continue with a stopping step of duration *Tₛ.* The duration *Tₛ* of the stopping step may be different for different wire saws and thus the index *i* could be added to *Tₛ* thereby becoming *T_{i,s},* but the index *i* is omitted for brevity. During this step, the wire may be slowed down until at least said section of the wire is halted. Halted means, that the relative motion of the wire relative to the workpiece holder is zero.

In a particularly preferred example, during the ramp-up step, the absolute value of the acceleration |*a*(*t*)| is decreased (but non-zero, i.e. |*a*(*t*)| > 0), compared to the acceleration during the same ramp-up step but at an earlier time of the acceleration. Hence, during the decrease of the acceleration, the absolute value of the speed |*v*(*t*)| increases. The decrease of the absolute value of the acceleration |*a*(*t*)| may take place during a time interval *T_{d}*, wherein *T_{d}* starts at *t*_{*d*₁} and ends at *t*_{*d*₂}.Concisely, this may be expressed as ∃*t*₁ < *t*₂; *t*₁, *t*₂ ∈ *T_{d}* .such that |*a*(*t*₁)| > |*a*(*t*₂)| and |*v*(*t*₁)| < |*v*(*t*₂)|, wherein *T_{d}* ⊆ *Tₐ*, i.e. *t*₀ ≤ *t*₁ ≤ *t*₂ ≤ *tₐ.* Again, the accelerations, durations, time intervals and points in time can be different for different wire saws, and again the index i has been omitted for brevity. In a preferred example, during the time interval *T_{d}* the acceleration *a*(*t*) is preferably monotonically decreased, i.e. |*a*(*t*₁)| = |*a*(*t*₂)| ∀ *t*₁ < *t*₂; *t*₁, *t*₂ ∈ *T*_{d}, particularly preferred the relation |*a*(*t*₁)| > |*a*(*t*₂)| holds V *t*₁ < *t*₂; *t*₁, *t*₂ ∈ *T_{d}*, i.e. it is particularly preferred if the acceleration (t) is strictly monotonically decreased).

This optional alternative decrease of the absolute value of the acceleration |*a*(*t*)| reduces the peak power *Max*(*Pᵢ*(*t*)) (for simplicity *Max*(*P*(*t*))) required by the *i^{th}*-wire drive significantly. This results in a reduction of the cost of investment for the respective wire saw, as the controller can be dimensioned for smaller currents (assuming the voltage as a given). In addition, the costs to provide the required grid are much lower. Unexpectedly, the increase in the duration *Tₐ* of the ramp-up step is negligible. This becomes vivid when realizing that the duration *Tₐ* of the ramp-up step according to the prior art is typically only a tenth of the duration *T*_{*i*,*n*} of the normal operation step. Hence even if the duration *T_{i,a}* of the ramp-up step is increased by e.g. 25%, the total increase in time for slicing the entire workpiece is small compared to the total time for slicing the entire workpiece.

In addition or in another optional alternative, the power *Pᵢ*(*t*) may be decreased at least once and/or kept constant during the time interval *T_{d}* and/or the duration *Tₐ*. This can be summarized as *P*(*t*₂ ) ≤ *P*(*t*₁) for at least one set of *t*₁, *t*₂ ∈ *T_{d}* wherein *t*₁ < *t*₂, preferably for all *t*₁, *t*₂ E *T_{d}* wherein *t*₁ < *t*₂. Concisely, the latter may be expressed as ∃*t*₁ < *t*₂; *t*₁, *t*₂ E *T_{d}* such that *Pᵢ*(*t*₁) ≥ *Pᵢ* (*t*₂). This measure as well enables to reduce the peak power *Max*(*Pᵢ*(*t*)) and hence the costs of investment, while the increase in the duration *Tₐ* is negligible compared to the total time for slicing a workpiece.

Both alternatives solve the same problem, but different parameters are controlled to obtain the result. In the first alternative the acceleration (*a*(*t*)) is controlled and in the second alternative the power *Pᵢ*(*t*) being provided to the drive is controlled. These parameters depend on each other, but the mapping is not bi-jective. As already apparent, it is preferred if the time interval *T_{d}* is identical with the duration *Tₐ* of the ramp-up step. As already stated, both alternatives may be combined.

The ramp-up step, the normal-operation step and the stopping step may be repeated, preferably until the workpiece has been cut, wherein the sign (representing the direction) of the acceleration in the ramp-up step is preferably altered from one repetition to the other, i.e. *Sign*(*aⱼ*(*t*) *= -Sign* (*a*_{*j+*1}(*t*)) ∀ 0 *< j < m,* wherein m is the number of iterations of the sequence comprising at least the ramp-up step, the normal-operation step and the stopping step required to cut a workpiece, and the index *j* indicates a particular iteration of the sequence of method steps. For example *a*₃(*t*) (more precisely *a*_{*i,*3}(*t*)) is the acceleration as a function of time (of the *i^{th}* wire saw) during the third execution of the ramp-up step, or more generally *aⱼ*(*t*) is the acceleration as a function of time during the *j^{th}* execution of the ramp-up step, if the index i is omitted (elsewise it would be *a_{i,j}*(*t*)). If the index is omitted it can be any iteration of the ramp-up step, i.e. at least one iteration. The same conventions apply to the speed *vⱼ*(*t*) (or more precisely to *v_{i,j}*(*t*)). In other words, the wire may reciprocate forth and back while slicing the workpiece.

Preferably, the length of the time interval *T_{d}* is at least 5%, more preferred at least 10% of the duration *Tₐ* of the ramp-up step, i.e. preferably 0.05 · *Tₐ* ≤ *T_{d}* (corresponding to 5%) or more preferred 0.1 · *Tₐ* ≤ *T_{d}* (corresponding to 10%). Generally, one may say that *α* · *Tₐ* ≤ *T_{d}*, wherein *α* ∈ {0.01, 0.05, 0.1, 0.15, 0.2, 0.25, 0.3, 0.4, 0.5, 0.6, 0.7, 0.8, 0.9,1}. The longer *T_{d}* is, the shorter can be the duration *Tₐ* of the ramp-up phase, hence the costs of operation for slicing a given workpiece can be reduced. Only to avoid any misunderstandings, the time interval *T_{d}* lies preferably within the ramp up phase, hence *t*₀ ≤ *t*_{*d*₁} ≤ *t*_{*d*₂} ≤ *tₐ* and thus *T_{d}* ⊆ *Tₐ*.

As already explained, in a particularly preferred example, the acceleration *a*(*t*) may be controlled as function of the power *P(t)* being provided to the wire drive, i.e., the acceleration may be controlled such that a constraint on the power *P(t)* is met. For example, during at least a portion of the ramp-up step, the acceleration may be controlled such that the power constraint *P*(*t*₂) ≤ *P*(*t*₁) is met. For example, the power may be controlled to meet *P*(*t*₂) = *P*(*t*₁) (∀*t*₁ *< t*₂; *t*₁, *t*₂ ∈ *T_{d}*), which minimizes *Tₐ* for a given maximum power and hence reduces the duration of the cutting process. In case the power provided to the *i^{th} -*wire drive is constant (i.e. *P_{i,max} = Pᵢ*(*t*₂) = *Pᵢ*(*t*₁) ∀*t*₁ *< t*₂; *t*₁, *t*₂ ∈ *T_{d}* or simply *P_{i,max} = Pᵢ*(*t*)∀*t* ∈ *T_{d}*, wherein preferably *T_{d} = Tₐ*, the acceleration *a*(*t*) (with *t*₁ ≤ *t* ≤ *t*₂) is maximized and controlled as function of the power, hence in this example *a*(*P*(*t*)). Different from what might be assumed, *P*(*t*₂) = *P*(*t*₁) does not lead to a constant acceleration, but to a decreasing acceleration. Only to avoid a misunderstanding, in practice *P*(*t*₂) = *P*(*t*₁) means that *P*(*t*₂) *= P*(*t*₁) · (1 + *β*), wherein *β* is an appropriately selected error margin (e.g. 25% or lower), typically *β* ∈ {0.25, 0.2, 0.1, 0.5, 0.1. 0.05, 0.025, 0.01, 0}. In other words, "=" shall be read as *"at least essentially equal",* wherein *"at least essentially equal"* shall be understood as preferably *"equal"* (*i.e., β* = 0) or at least *"equal within a non-vanishing relative error margin of* ±*β*".

Without being bound to theory, it is believed that the power increase for maintaining a constant acceleration of the wire drive is a result of the increased cutting speed and the increase of friction losses. In other words, the power consumption being required for moving the wire at a given speed relative to the workpiece increases with the wire speed as the cutting speed increases with the speed of the wire relative to the workpiece (assuming a non-necessarily constant force by which the wire is pressed against the workpiece and the contact surface between the wire and the workpiece being cut being assumed to be constant as well).

In an example, the ramp-up phase may have at least a first section and a second section. Each of these sections may be considered as first substep and second substep, respectively, of the ramp-up phase. During the first section, the wire drive may be controlled to maintain the acceleration *a*(*t*) at least essentially constant. For example, during the first substep, the acceleration *a*(*t*) of the wire may be determined and based on the determined acceleration *a*(*t*), the power provided to the wire drive may be controlled to maintain the acceleration *a*(*t*) at a given predetermined value *a_{pd}*(*t*) within an error margin of 25% or lower or more generally within an error margin of ±*ε* · *a_{pd}*(*t*), i.e. *P*(*t*) *= P*(*a*(*t*))., wherein
∈ ∈ {0, 0.25, 0.2, 0.1, 0.5, 0.1. 0.05, 0.025, 0.01, 0}. As generally herein, smaller error margins are preferred. As apparent, the predetermined acceleration *a_{pd}*(*t*) may be a constant (*a_{pd}*(*t*) *= const. Vt* ∈ *T*_{*a*1}), but it may as well be a non-constant function of time.

The first section may be terminated after a predetermined duration and/or if the power *Pᵢ*(*t*) reaches a power threshold *P_{i,t}*(*t*) and/or if the speed has reached a speed threshold *vₜₕ.* All three possibilities enable to limit the maximum power consumption of the wire drive. Below, we will omit the wire saw identifying index i, i.e. *Pₜ*(*t*) *= P_{i,t}*(*t*) as it is clear that each wire saw may have individual power thresholds.

During a later, e.g. immediately following, second section of the ramp-up phase, the wire drive may be controlled to maintain the power *P(t)* provided to the wire drive below a (first) threshold value *P*_{*t,*1}(= *P*_{*i,t,*1}). There are multiple possibilities: In an example, the power *P(t)* provided to the wire drive may be maintained at least essentially constant (i.e. constant with an error margin ±*β* · *Pₜ*(*t*), as explained above the error margin may be 25% (*β* = 0.25) of the threshold value or less, preferably *β* ∈ {0, 0.25, 0.2, 0.1, 0.5, 0.1. 0.05, 0.025, 0.01, 0}). In this example, the acceleration steadily decreases with increasing wire speed. This example has the advantage of minimizing the duration of the ramp-up phase. Like in this example, the power limiting constraint may change during the ramp-up phase. In the first section, the required power may be a result of the selected acceleration *a*(*t*) (i.e. *P*(*t*) *= P*(*a*(*t*)), whereas in the second section the resulting acceleration may be a result of the power *P(t)* provided to the wire drive (i.e. *a*(*t*) *= a*(*P*(*t*)).

In another example, in the second section, the power *P(t)* may be reduced by a value Δ*P*₁ compared to the power at the end of the previous section, e.g. the first section. Subsequently, the method may continue with an optional third section of the ramp-up phase. In this third section the absolute value of the acceleration may again be constant or variable, but it may preferably have a value lower than at the end of the first section. This variant may be easier to implement in already existing controllers and may hence be retrofitted by a simple software update. If required, this method can be iterated until the wire drive has reached an intended speed: For example, if during the third section the power *P*(*t*) exceeds a second threshold *P*_{*t,*2}, the power may be reduced again, by a value Δ*P*₂ in a fourth section, which may be followed by a fifth section in which the power may again be raised. More generally in a section *l*, the power may be raised to a power threshold *P_{t,l}.* In the subsequent section *l* + 1 the power may be lowered by Δ*P*_{*l*+1}. Next the power may be raised again, until a power threshold *P*_{*t,l*+2} is reached and in the next section *l* + 3 it may be lowered a corresponding value *ΔP*_{*l*+3} and so forth until the wire reached its intended speed. As can be seen in each uneven step *l* the power may be increased to a threshold power ${ΔP}_{Int \left(\frac{l + 1}{2}\right)}$. In the subsequent even step *l* may be raised by one (*l*: = *l* + 1) and the power to the next threshold power *P*_{*t,Int*(*l*/2)*.*} In a preferred example, all threshold powers *P_{t,n}* during a ramp-up phase are identical (*n* indicates the number of times the steps are iterated, wherein the first iteration is *n* = 1.)

In the first section, i.e. in a first substep, of the ramp-up phase, the acceleration may be maintained (within the error margin *ε · a_{pd}*(*t*)) at or below a predetermined value. To this end, the change of the speed as a function of time may be monitored and the wire drive may be controlled based on the monitored change of the speed to compensate for the changes. This first section of the ramp-up phase enables to reliably speed the wire up, while having a low risk for a wire rupture and variations in the wire position relative to the workpiece holder are keep as low as possible. The negative effect of the ramp-up phase on the constant thickness of the slices is reduced.

In more detail, it is preferred if in the second of the substeps, the power *P(t)* provided to the wire drive is determined and the acceleration *a*(*t*) of the wire may be controlled based on the determined power *P(t),* i.e. *a*(*t*) *= a*(*P*(*t*)) during the second substep.

For example, at the beginning *t*_{*a*21} of the second substep, the power *P*(*t*_{*a*21}) may be higher than the power *P*(*t*_{*a*22}) at the end *t*_{*a*22} of the second substep. Hence in this example *P*(*t*_{*a*21}) > *P*(*t*_{*a*22}). The reduction allows to essentially reiterate the first substep as a third substep, keeping the controller and its software simple.

Further, it is particularly preferred if the durations *T*_{*a*1} and *T*_{*a*2} at least essentially meet *T*_{*a*2} ≤ *α* · Tₐ₁, wherein *T*_{*a*2} *= t*_{*a*22} - *t*_{*a*21} , *T*_{*a*1} *= t*_{*a*12} - *t*_{*a*11} and *α* ∈ {0.25, 0.2, 0.1, 0.05,0.025,0.01, 0.001} . The power is essentially stepped down, thereby keeping the second substep short.

Further, it is preferred if the power value to which the power is reduced corresponds at least essentially to the power required to maintain the wire at the speed already reached at the beginning of the second substep, hence *P*(*t*_{*a*22}) *=* (1 ± β) · *P*(*v*(*t*_{*a*21})), wherein *β* ∈ {0, 0.25, 0.2,0.1, 0.5, 0.1. 0.05, 0.025, 0.01} and *P*(*v*(*t*_{*a*21})) is the power to maintain the speed of the wire constant at *v*(*t*_{*a*21}). It is implicit that in this example, the power P(t) is raised thereafter (e.g. continuously or to a static value) to continue the acceleration of the wire, but the reduction at the end of the first substep keeps the mean power lower and as well the peak power consumption. As explained above, *β* is a relative error margin of 25% or less.

If the second substep immediately follows the first substep, then it can be assumed that *t*_{*a*12} *= t*_{*a*21}, meaning that the end of the first substep may coincide with the beginning of the second substep.

In the example of three or more substeps, it is preferred if the acceleration is maintained at a first value for a first duration *T*ₐ₁ and subsequently reduced to a second value during a second duration *T*ₐ₂, and then maintained at this reduced value during a third duration *T*ₐ₃, wherein the second value is lower than the first value.

In the second section of the ramp-up phase, the acceleration may alternatively be controlled as a function of the power provided to the wire drive. For example, the power may be monitored, and the acceleration may be increased and/or decreased to maintain the monitored power at least essentially constant. In practice, this will provide a steady decrease of the acceleration until the wire reaches its intendent speed *vₙ* (or *-vₙ* , here *n* stands for *normal operation*)*.* Such second phase provides the advantage of maintaining the power consumption as low as required, while at the same time keeping the ramp-up phase as short as possible with the given power constraint.

As usual in the field of mechanical engineering, herein small "t" symbolizes a point in time and capital "T" a duration or an interval in time. The indices are used to distinguish different durations and points in time.

The method steps herein may be implemented as instructions for a controller. These instructions may be stored on a computer or controller readable memory or any other tangible memory. Accordingly, a controller may be configured to execute the method by controlling a wire saw or at least the drive of a wire saw according to any one of the method steps disclosed herein and/or according to any combination of these steps. The controller may be a wire saw controller and/or configured to control any kind of wire saw described herein or known in the art.

As usual in the art, "at least essentially" shall be understood that a defined feature (such as parallel, perpendicular, equal, ...) is preferably realized and if not exactly realized, then within a reasonable limit of e.g., 10%, 5%, 2.5%, 1%, 0.1% or 30°, 20°, 10°, 5°, 2.5°, 1°, 0.1°, respectively, unless an explicit boundary is given. Further as usual, *Int*(*q*) denotes the integer portion of a real number *q ,* e.g. $Int \left(\frac{1}{2}\right) = 0$ and $Int \left(\frac{3}{2}\right) = 1$.

It is noted that a first step may be but is not necessarily the initial step. A second step is generally executed after the respective first step. Such second step may be executed subsequently (directly after the first step) or with other steps in between. The same holds generally for any pair of *m^{th}*-step and (*m* + 1)*^{th}*-step (wherein m is a natural number).

The index i has often been omitted above (and will be below), but It is noted that the index i could of course be added, e.g., for formalistic consistency.

### Description of Drawings

In the following, the invention will be described by way of example, without limitation of the general inventive concept, on examples of embodiment with reference to the drawings.
Figure 1 presents a method.
Figure 2 presents a power over time diagram according to the prior art.
Figure 3 presents a first power over time diagram according to the invention.
Figure 4 presents a second power over time diagram according to the invention.
Figure 5 presents an acceleration over time diagram according to the invention.

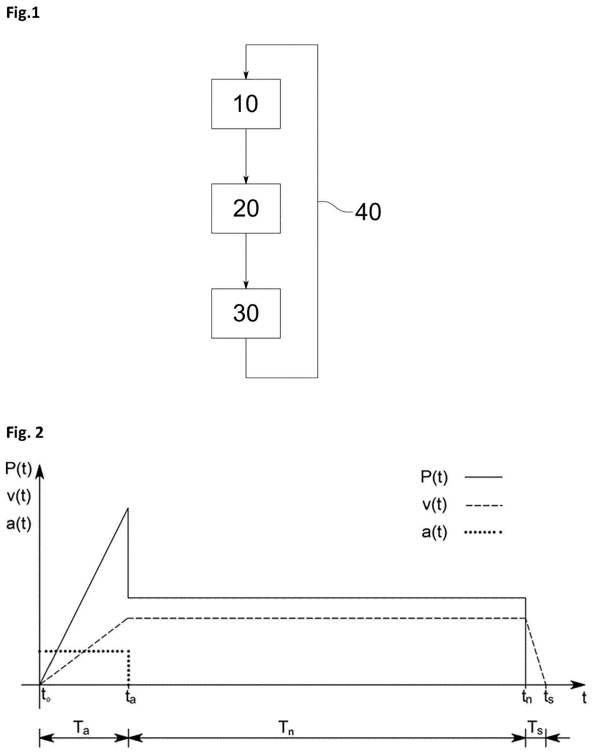

The method in FIG. 1 starts with a ramp-up step 10 of a duration *Tₐ*. The ramp-up step may be followed by a normal-operation step 20 of a duration *Tₙ* and a stopping step 30 of a duration *Tₛ.* The sequence of the ramp-up step 10, the normal-operation step 20 and the stopping step may be repeated (step 40) until a workpiece has been cut and/or a fault occurred.

FIG. 2 shows a diagram of the power *P*(*t*) provided to a wire saw as a function of time: In a ramp-up phase, the power *P*(*t*) (solid line) is increased, e.g. like in the given example to maintain the acceleration *a*(*t*) (dotted line) of the wire constant. The ramp-up phase may have a duration *Tₐ* starting at *t*₀ and ending at *tₐ*, i.e. *P*(*t*₁) *< P*(*t*₂)∀*t*₁ < *t*₂;*t*₁,*t*₂ ∈ *Tₐ*. Subsequently, i.e. for *t > tₐ*, the power *P*(*t*) may preferably be maintained at least essentially constant. This is the normal-operation step 20. During this portion of the process, the wire speed *v*(*t*) (dashed line) is essentially constant and the power consumption *P*(*t*) of the wire drive is a well (normal operation step 20). After a given amount of wire has been sliced through the workpiece, the wire is slowed down to a full stop (stopping step 30) between *tₙ* an *tₛ,* i.e. the power consumption of the drive is zero, i.e. *P*(*tₛ*) = 0, if separate brakes are used ( and/or (only) the friction of the wire and the rollers). Alternatively, the wire drive may slow the wire and the wire drive down, in this case power is recuperated, i.e. *P*(*tₛ*) < 0. The acceleration would be negative and has been omitted for the stopping step. Further, the stopping step may be very short, i.e. *Tₛ <* 1*s.*

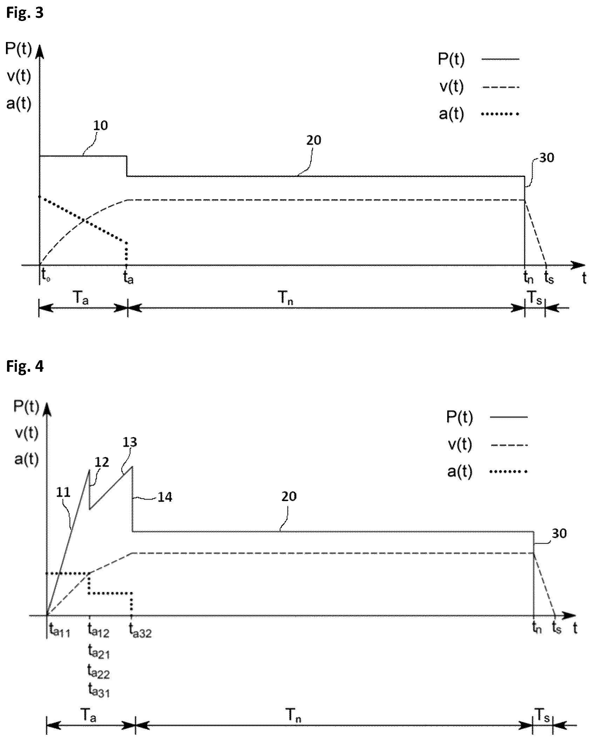

FIG. 3 shows a diagram of the power *Pᵢ*(*t*) *= P*(*t*) (solid line) provided to a wire saw (e.g. to the *i^{th}*-wire saw) as a function of time according to an embodiment of the invention. The steps of normal operation and the stopping step can be executed as known in the art and/or as shown in FIG. 2. As can be seen, during the ramp-up step (i.e. from *t*₀ to *tₐ*), the power *P*(*t*) may be maintained at least essentially constant. In the present example, this does not even result in an increase of the duration *Tₐ* of the ramp-up phase, as the mean power during the ramp-up phase is identical to the mean power during the ramp-up phase as shown in FIG. 1 but allows to keep the peak power consumption much smaller. Selecting a slightly higher power *P*(*t*) during the ramp-up phase may even allow to shorten the duration of the ramp-up phase. Like in FIG. 2, the dotted line shows the acceleration *a*(*t*) and the dashed line the velocity of the wire *v*(*t*)*.*

FIG. 4 shows another diagram of the power *Pᵢ*(*t*) *= P*(*t*) (solid line) that may be provided to a wire saw drive (e.g. to the drive of the *i^{th}*-wire saw) as a function of time t. The dotted line represents the acceleration *a*(*t*) of the wire and the dashed line represents the wire speed v(t).

As shown in Fig. 4, the power *P*(*t*) during the ramp-up phase may even be reduced. In an optional first substep 11 (herein briefly: first substep 11), the power *P(t)* (*t*_{*a*11} ≤ *t* ≤ *t*_{*a*12}) may be ramped up to a first maximum *P*(*t*_{*a*12}). In an optional later substep 12 (herein briefly: second substep 12), the power may be reduced to *P*(*t*_{*a*22}) in a time interval of a duration *T*_{*a*2} between *t*_{*a*21} and *t*_{*a*22}, hence *P*(*t*_{*a*22}) < *P*(*t*_{*a*12}). In an optional further later substep 13 (herein briefly: third substep 13) starting at *t*_{*a*31} and ending at *t*_{*a*32} the power *P*(*t*) is increased again from *P*(*t*_{*a*31}) to *P*(*t*_{*a*32}), i.e. during an interval starting at *t*_{*a*31} and ending at *t*_{*a*32}. At t = *t*_{*a*32}, the intended wire speed *v_{pd}* is reached and the power can be reduced to a value required for maintaining the wire speed at least essentially constant during the step of normal operation (optional fourth substep 14). It is noted that the fourth substep 14 can be omitted, e.g. if *P_{i,max}* = *P*(*vₐₚ*) (in this case the acceleration should be controlled as function of power, i.e. *a*(*t*) *= a*(*P*(*t*), *v*(*t*)), similar to FIG. 3.

At least the optional later substep 12 and the further optional substep 13 may be reiterated, if the intended wire speed has not been reached until *t*_{*a*32}· The power reductions or increases ΔP during the respective reiterated steps do not need to be same, but they may be. Further, it is clarified that as shown in Fig. 4, *P*(*t*_{*a*12}) < *P*(*t*_{*a*32}) is an alternative, only, and shall not to be understood as limiting. The alternative *P*(*t*_{*a*12}) *= P*(*t*_{*a*32}) may be preferred, in particular if *P*(*t*_{*a*12}) *= P*(*t*_{*a*32}) *= Pₘₐₓ* (reduced duration of *Tₐ* for a given maximim power threshold) and *P*(*t*_{*a*12}) > *P*(*t*_{*a*32}) is possible as well.

As already explained, the ramp-up step as shown in FIG. 4 may comprise preferably at least three substeps 11, 12, 13: In an optional first substep 11 of a duration *T*_{*a*1}, e.g. from *t*_{*a*11} to *t*_{*a*12}, the wire drive may accelerate the wire with a first acceleration *a*_{*T*ₐ₁}.

In the optional later substep 12 (e.g. in a second substep 12) the acceleration *a*(*t*) (dotted line) may be reduced to a second value *a*_{*T*ₐ₂}*.* Like in FIG. 4 this reduction may take place essentially between *t*_{*a*12} = *t*_{*a*21} and *t*_{*a*22}. The later substep 12 (briefly: second substep) may hence have a duration *T*_{*a*2} = *t*_{*a*22} - *t*_{*a*21}. The duration *T*_{*a*2} of the later substep 12 may be very short, even (almost) zero. In the optional further later substep 13 (briefly: third substep 13), the acceleration *a*_{*T*ₐ₃} may be different compared to the acceleration *a*_{*T*ₐ₁} during the first substep 11. In a preferred example, the acceleration *a*_{*T*ₐ₃} is below the acceleration *a*_{*T*ₐ₁}. In the depicted example, the acceleration *a*_{*T*ₐ₃} during the third substep 13 equals at least essentially the acceleration *a*_{*T*ₐ₂}*(t*_{*a*2}) at the end of the second substep. Herein *a*_{*T*ₐ₁}, *a*_{*T*ₐ₂} and *a*_{*T*ₐ₃} have been assumed as constants, but this is only a preferred example. Generally *a*_{*T*ₐ₁}*, a*_{*T*ₐ₂} and *a*_{*T*ₐ₃} may be varied as a function of time, i.e. *a*_{*Ta*1} *= a*_{*Ta*1} (*t*),*a*_{*T*ₐ₂} *= a*_{*T*ₐ₂}(*t*) and *a*_{*T*ₐ₃} *= a*_{*T*ₐ₃}(*t*). In any case it is preferred if ∃*t_{y}* ∈ *T*_{*a*1}, *tₓ* ∈ *T*_{*a*3} such that *a*(*t_{y}*) *> a*(*tₓ*). In the depicted example *a*(*t_{y}*) *> a*(*tₓ*)∀*t_{y}* ∈ *T*_{*a*1}, *tₓ* ∈ *T*_{*a*3}, but this is only a preferred example. The dashed line represents the wire speed v(t), as can be seen the wire speed increases during the first substep 11 with a first slope which is represented by the first acceleration *a*_{*T*ₐ₁}, during the second substep the slope is altered being visible as kink in the wire speed *v*(*t*_{*a*21}) as in this example the duration of the second substep is essentially zero. During the third substep 13 the speed increase with a reduced slope *a*_{*T*ₐ₂} compared to the first substep 11.

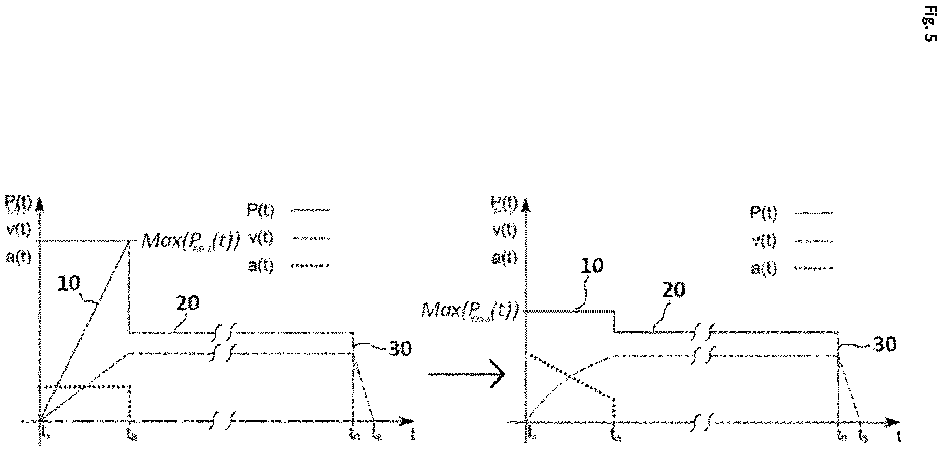

Although the figures are only schematic, it is clear that the maximum power value *Max*(*P*_{*FIG.*2}(*t*)) in Fig. 2 is significantly higher than the maximum power values *Max*(*P*_{*FIG*.3}(*t*)) and *Max*(*P*_{*FIG*.4}(*t*)) in Fig. 3 and 4, respectively, as being visualized in FIG. 5 with respect to Fig. 2 and FIG. 3.

### List of reference numerals

- 10: ramp-up step
- 11: first substep
- 12: second substep
- 13: third substep

- 20: normal-operation step
- 30: stopping step
- 40: repeating step

- *Pₜ*: Power threshold

- *Tₐ*: Duration of ramp-up step
- *T_{d}*: Duration of a portion of ramp-up step
- *Tₙ*: Duration of the normal-operation step
- *Tₛ*: Duration of the stopping step

- *t*₀: Start of *Tₐ*
- *tₐ*: End of *Tₐ* and start of *Tₙ*
- *tₙ*: End of *Tₙ* and start of *Tₛ*
- *tₛ*: End of *Tₛ,* start of next *Tₐ*

- *t*_{*a*11}: start of first substep 10
- *t*_{*a*12}: end of first substep 10
- *t*_{*a*21}: start of second substep 20
- *t*_{*a*22}: end of second substep 20
- *t*_{*a*31}: start of third substep 30
- *t*_{*a*32}: end of third substep 30

## Claims

1. A method for operating one or more wire saws each having a wire for cutting a workpiece and a wire drive for moving at least a section of the wire relative to the workpiece, **characterized in that** the method comprises the steps of:
(a) Assigning a reduced maximal power *P_{i,max}* to at least one of the wire saws,
(b) operating at least said at least one of the wires saws so that the power *Pᵢ*(*t*) being provided to its wire drive does not supersede its assigned reduced maximal power, i.e. the condition *Pᵢ*(*t*) ≤ *P_{i,max}* Vt is obeyed during controlling of the *i^{th}* wire saw.

2. The method of claim 1, wherein in step (b) the motion of the one and/or more wire is operated in other to delimit the maximum power of the respective wire saw's drive, preferably by controlling the speed and/or acceleration of the wire.

3. The method of claim 1 or 2, further comprising the step, preferably prior to step (a), of:
defining a maximal total power *P_{tot,max}* that can be used and chosing the total sum of all wire saws so that it remains below that maximal total power, i.e. Σ*ᵢPᵢ*(*t*) ≤ *P_{tot,max},* preferably ∀*t*.

4. The method of one of the previous claims **characterized in that** the method further comprises at least one of the following steps:
(i) a ramp-up step (10) of duration *Tₐ* starting at *t*₀ and ending at *tₐ*, comprising: powering the wire drive with a power *P*(*t*) to accelerate at least a section of the wire with an acceleration *a*(*t*) in an axial direction of the wire and relative to the workpiece, wherein *t* symbolizes time,
(ii) a normal-operation step (20) of duration *Tₙ*, comprising: maintaining an axial speed *vₙ* of at least the section of the wire constant within a given error margin of ±*ε* · *vₙ*, wherein *ε* ∈ {0.5; 0.1; 0.05; 0.025; 0.01}, and
(iii) a stopping step (30) of duration *Tₛ,* comprising: slowing at least the section of the wire down until at least the section of the wire is halted,
wherein:
during the ramp-up step, for at least a time interval *T_{d}* starting at *t*_{*d*₁} and ending at *t*_{*d*₂} :
the absolute value of the acceleration |*a*(*t*)| is decreased at least once, i.e. such that |*a*(*t*₁)| > |*a*(*t*₂)|, and/or
the power *P*(*t*) is decreased at least once and/or kept constant, i.e. *P*(*t*₂) ≤ *P*(*t*₁),
and wherein in both alternatives *t*₁ is smaller than *t*₂ and wherein *t*₁ and *t*₂ are in between of *t*_{*d*₁} and *t*_{*d*₂}, i.e. *t*_{*d*₁} ≤ *t*₁ *< t*₂ ≤ *t*_{*d*₂}.

5. The method of claim 4, further comprising:
(iv) Repeating (40) the ramp-up step (10) at least once after the stopping step (30) has been executed, wherein the sign of the acceleration is inverted compared to the acceleration of the prior ramp-up step (i).

6. The method of claim 4 or 5, **characterized in that** the time interval *T_{d}* is greater or equal than $\frac{1}{10}$ of *Tₐ*, i.e., $\frac{1}{10} ⋅ {T}_{a} \leq {T}_{d} \leq {T}_{a}$.

7. The method of one of the previous claims, **characterized in that** the power *Pᵢ*(*t*) of the drive for moving the wire during the ramp-up step is controlled to meet *Pᵢ*(*t*₂) ≤ *Pᵢ*(*t*₁*),* for all *t*₁ <*t*₂.

8. The method of one of the claims 4 to 7, **characterized in that** the ramp-up step (10) comprises at least a first substep (11), wherein during the first substep (11), the acceleration *a*(*t*) of the wire is determined and based on the determined acceleration *a*(*t*), the power *Pᵢ*(*t*) provided to the wire drive
a. is controlled to maintain the acceleration *a*(*t*) at a given predetermined value *a_{pd}*(*t*) within an error margin of 25% or less, and/or
b. is increased as function of time *t*, and/or
c. is maintained at least essentially constant within an error margin of 25% or less.

9. The method of the previous claim, **characterized in that** the first substep (11) is terminated after a given duration and/or if the power *Pᵢ*(*t*) reaches a power threshold *P*_{*i,t,n*(*t*)} and/or if the speed has reached a speed threshold, wherein *n* indicates the number of times the first substep (11) is executed.

10. The method of the previous claim, **characterized in that** if the power threshold *P_{t,n}*(*t*) has been reached, a second substep (12) is executed, wherein in the second substep (12) the power *P(t)* is decreased by a value Δ*Pₙ* compared to the power *P*(*t*) at the end of previous first substep (11), and wherein n indicates the number of times the second substep (12) is executed, and **in that** the method continues with the first substep (11) as defined in claim 8.

11. The method of one of claims 4 to 10, **characterized in that** the ramp-up step comprises at least two substeps (11, 12, 13) and **in that** during a second substep (12) the wire drive is controlled to maintain the power *P(t)* provided to the wire drive at or below a threshold value (*Pₜ*(*t*))*, i*.e. *P*(*t*) ≤ *Pₑ*(t)∀*t* ∈ [*t*₀, *tₐ*].

12. The method of the previous claim, **characterized in that** at least one of the substeps (11, 12, 13), the power *P*(*t*) provided to the wire drive is determined and the acceleration *a*(*t*) of the wire is controlled based on the determined power *P*(*t*)*,* i.e. *a*(*t*) *= a*(*P*(*t*)) during the second substep.

13. The method of previous claim11 or 12, **characterized in that** at the beginning *t*_{*a*21} of the second substep (12) the power *P*(*t*_{*a*21}) is higher than the power *P*(*t*_{*a*22}) at the end *t*_{*a*22} of the second substep (12), i.e. *P*(*t*_{*a*21}) *> P(^{t}ₐ₂2)^{.}*

14. The method of the previous claim, **characterized in that**: $P \left({t}_{a 22}\right) = \left(1\pm β\right) P \left(v\left({t}_{a 21}\right)\right) ,$ wherein $β ∈ \left\{0, 5, 0.25, 0.2, 0.1, 0.05, 0.025, 0.01\right\} .$

15. The method of one of claims 4 to 14, **characterized in that** during the ramp-up step (10), the acceleration is maintained at a first value for a first duration *T*₁ and subsequently maintained at a second value for a second duration *T*₂, wherein the second value is lower than the first value.

16. The method of one of the previous claims, **characterized in that** it comprises controlling at least two wire saws according to the one of the methods of at least one of the previous claims, i.e.1 ≤ *i* ≤ *N* and 2 ≤ *N,* wherein *N* denotes the number of wire saws being controlled according to the method.

17. A tangible memory comprising program instructions that when executed by a controller, cause the controller to execute the method of one of the previous claims.

18. A controller, being configured to execute the method of one of the previous method claims 1 to 16 and/or comprising the memory of claim 17.

19. A wire saw configured for cutting a workpiece comprising at least:
- a workpiece support,
- a wire drive configured to drive least a section of the wire relative to the workpiece support in a reciprocating motion, and
- a controller controlling the wire drive,
**characterized in that** the controller is configured to execute the method of one of the previous method claims 1 to 16 and/or comprises the memory of claim 17 and/or is the controller of claim 18.

## Patentansprüche

1. Ein Verfahren zum Betreiben einer oder mehrerer Drahtsägen, die jeweils einen Draht zum Schneiden eines Werkstücks und einen Drahtantrieb zum Bewegen mindestens eines Abschnitts des Drahtes relativ zum Werkstück aufweisen,
**dadurch gekennzeichnet, dass** das Verfahren die folgenden Schritte aufweist:
(a) Zuweisen einer reduzierten maximalen Leistung *P_{i,max}* zu mindestens einer der Drahtsägen,
(b) Betreiben mindestens der mindestens einen der Drahtsägen, so dass die seinem Drahtantrieb zugeführte Leistung *Pᵢ*(*t*) seine zugewiesene reduzierte Maximalleistung nicht überschreitet, d. h. die Bedingung *Pᵢ*(*t*) ≤ *P_{i,max}* Vt wird während der Steuerung der *i^{ten}* Drahtsäge eingehalten.

2. Das Verfahren gemäß Anspruch 1, wobei in Schritt (b) die Bewegung des einen Drahts und/oder der mehreren Drähte u.a. so betrieben wird, dass die maximale Leistung des jeweiligen Drahtsägeantriebs begrenzt wird, vorzugsweise durch Steuerung der Geschwindigkeit und/oder Beschleunigung des Drahtes.

3. Das Verfahren gemäß Anspruch 1 oder 2, weiterhin aufweisend den Schritt, vorzugsweise vor Schritt (a):
Definieren einer maximalen anwendbaren Gesamtleistung *P_{tot,max}* und Auswählen der Gesamtsumme aller Drahtsägen, so dass sie unterhalb dieser maximalen Gesamtleistung bleibt, d.h. Σᵢ *Pi* (*t*) ≤ *p_{tot,max},* vorzugweise ∀*t*.

4. Das Verfahren nach einem der vorhergehenden Ansprüche, **dadurch gekennzeichnet, dass** es weiterhin mindestens einen der folgenden Schritte aufweist:
(i) einen Anlaufschritt (10) der Dauer *Tₐ*, der bei *t*₀ beginnt und bei *tₐ* endet, aufweisend: Versorgen das Drahtantriebs mit einer Leistung *P*(*t*)*,* um mindestens einen Abschnitt des Drahtes mit einer Beschleunigung *a*(*t*) in axialer Richtung des Drahtes und relativ zum Werkstück zu beschleunigen, wobei t die Zeit symbolisiert,
(ii) einen Normalbetriebsschritt (20) der Dauer *Tₙ*, aufweisend: Aufrechterhalten einer axialen Geschwindigkeit *vₙ* mindestens des Drahtabschnitts, konstant innerhalb einer vorgegebenen Fehlertoleranz von ±*ε* · *uₙ,* wobei *ε* ∈ { 0.5; 0.1; 0.05; 0.025; 0.01} ist, und
(iii) einen Stoppschritt (30) der Dauer *Tₛ,* aufweisend: Verlangsamen mindestens des Drahtabschnitts, bis mindestens der Drahtabschnitt angehalten wird,
wobei:
während der Anlaufschrittes, für mindestens ein Zeitintervall *T_{d}*, das bei *t*_{*d*₁} startet und bei *t*_{*d*₂} endet:
der absolute Wert der Beschleunigung |*a*(*t*)| mindestens einmal verringert wird, d. h. so dass |*a*(*t*₁)| > |*a*(*t*₂)|, und/oder
die Leistung *P(t)* mindestens einmal verringert und/oder konstant gehalten wird, d.h. *P*(*t*₂) ≤ *P*(*t*₁),
und wobei in beiden Alternativen *t*₁ kleiner ist als *t*₂ und wobei *t*₁ und *t*₂ zwischen *t*_{*d*₁} und *t*_{*d*₂} liegen, d.h.. *t*_{*d*₁} ≤ *t*₁ < *t*₂ ≤ *t*_{*d*₂}.

5. Das Verfahren gemäß Anspruch 4, weiterhin aufweisend:
(iv) Wiederholen (40) des Anlaufschritts (10) mindestens einmal nachdem der Stoppschritt (30) ausgeführt wurde, wobei das Vorzeichen der Beschleunigung im Vergleich zur Beschleunigung des vorhergehenden Anfahrschritts (i) umgekehrt ist.

6. Das Verfahren gemäß Anspruch 4 oder 5, **dadurch gekennzeichnet, dass** das Zeitintervall *T_{d}* größer oder gleich $\frac{1}{10}$ von *Tₐ* ist, d. h. $\frac{1}{10} ⋅ {T}_{a} \leq {T}_{d} \leq {T}_{a}$.

7. Das Verfahren gemäß einem der vorhergehenden Ansprüche, **dadurch gekennzeichnet, dass** die Leistung *Pᵢ*(*t*) des Antriebs zum Bewegen des Drahtes während des Anlaufschritts so gesteuert wird, dass *Pᵢ*(*t*₂) ≤ *Pᵢ*(*t*₁)*,* für alle *t*₁ < *t*₂ zutrifft.

8. Das Verfahren gemäß einem der Ansprüche 4 bis 7, **dadurch gekennzeichnet, dass** der Anlaufschritt (10) mindestens einen ersten Teilschritt (11) aufweist, wobei während des ersten Teilschritts (11) die Beschleunigung *a*(*t*) des Drahtes bestimmt wird und basierend auf der bestimmten Beschleunigung *a*(*t*), die dem Drahtantrieb zugeführte Leistung *Pᵢ*(*t*)
a. so gesteuert wird, dass die Beschleunigung *a*(*t*) bei einem vorgegebenen Wert *a_{pd}*(*t*) innerhalb einer Fehlertoleranz von 25 % oder weniger gehalten wird, und/oder
b. als Funktion der Zeit t erhöht wird, und/oder
c. zumindest im Wesentlichen konstant gehalten wird innerhalb einer Fehlertoleranz von 25 % oder weniger.

9. Das Verfahren nach dem vorhergehenden Anspruch, **dadurch gekennzeichnet, dass** der erste Teilschritt (11) nach einer vorgegebenen Dauer und/oder wenn die Leistung *Pᵢ*(*t*) eine Leistungsschwelle *P_{i,t,n}*(*t*) erreicht und/oder wenn die Geschwindigkeit eine Geschwindigkeitsschwelle erreicht hat, beendet wird, wobei n die Anzahl der Ausführungen des ersten Teilschritts (11) angibt.

10. Das Verfahren nach dem vorhergehenden Anspruch, **dadurch gekennzeichnet, dass**, wenn die Leistungsschwelle *P_{t,n}*(*t*) erreicht ist, ein zweiter Teilschritt (12) ausgeführt wird, wobei in dem zweiten Teilschritt (12) die Leistung *P(t)* um einen Wert Δ*Pₙ* gegenüber der Leistung *P(t)* am Ende des vorhergehenden ersten Teilschritts (11) verringert wird,
und wobei n die Anzahl der Ausführungen des zweiten Teilschritts (12) angibt, und dadurch, und dass das Verfahren mit dem ersten Teilschritt (11) wie definiert in Anspruch 8 fortfährt.

11. Das Verfahren nach einem der Ansprüche 4 bis 10, **dadurch gekennzeichnet, dass** der Anlaufschritt mindestens zwei Teilschritte (11, 12, 13) aufweist und dass während eines zweiten Teilschritts (12) der Drahtantrieb so gesteuert wird, dass die dem Drahtantrieb zugeführte Leistung *P*(*t*) bei oder unter einem Schwellenwert (*Pₜ*(*t*)) gehalten wird, d. h. *P*(*t*) ≤ *Pₑ*(*t*)∀*t* ∈ [*t*₀, *tₐ*].

12. Das Verfahren nach dem vorhergehenden Anspruch, **dadurch gekennzeichnet, dass** in mindestens einem der Teilschritte (11, 12, 13) die dem Drahtantrieb zugeführte Leistung *P*(*t*) bestimmt wird und die Beschleunigung *a*(*t*) des Drahtes basierend auf der bestimmten Leistung *P*(*t*) gesteuert wird, d. h. *a*(*t*) *= a*(*P*(*t*)) während des zweiten Teilschrittes.

13. Das Verfahren nach dem vorhergehenden Anspruch 11 oder 12, **dadurch gekennzeichnet, dass** zu Beginn *t*_{*a*21} des zweiten Teilschritts (12) die Leistung *P*(*t*_{*a*21}) höher ist als die Leistung *P*(*t*_{*a*22}) am Ende *t*_{*a*22} des zweiten Teilschritts (12), d.h. *P*(*t*_{*a*21}) > *P*(*t*_{*a*22}).

14. Das Verfahren nach dem vorhergehenden Anspruch, **dadurch gekennzeichnet, dass**: $P \left({t}_{22}\right) = \left(1+β\right) P \left(v\left({t}_{a 21}\right)\right) ,$ wobei $β ∈ \left\{0,5;0.25; 0.2; 0.1; 0.05; 0.025; 0.01\right\} .$

15. Das Verfahren nach einem der Ansprüche 4 bis 14, **dadurch gekennzeichnet, dass** während des Anlaufschritts (10) die Beschleunigung für eine erste Dauer *T*₁ auf einem ersten Wert gehalten und anschließend für eine zweite Dauer *T*₂ auf einem zweiten Wert gehalten wird, wobei der zweite Wert niedriger ist als der erste Wert.

16. Das Verfahren nach einem der vorhergehenden Ansprüche, **dadurch gekennzeichnet, dass** es das Steuern von mindestens zwei Drahtsägen nach einem der Verfahren nach mindestens einem der vorhergehenden Ansprüche aufweist, d.h. 1 ≤ *i* ≤ *N* und 2 ≤ *N,* wobei *N* die Anzahl der nach dem Verfahren gesteuerten Drahtsägen bezeichnet.

17. Ein physischer Speicher aufweisend Programmanweisungen, die, wenn sie von einer Steuerung ausgeführt werden, die Steuerung veranlassen, das Verfahren eines der vorhergehenden Ansprüche auszuführen.

18. Eine Steuerung, die so konfiguriert ist, dass sie das Verfahren eines der vorhergehenden Verfahrensansprüche 1 bis 16 ausführt und/oder den Speicher des Anspruchs 17 aufweist.

19. Eine Drahtsäge zum Schneiden eines Werkstücks, aufweisend mindestens:
- eine Werkstückhalterung,
- einen Drahtantrieb, der konfiguriert ist, um mindestens einen Abschnitt des Drahtes relativ zur Werkstückhalterung in einer hin- und hergehenden Bewegung anzutreiben, und
- eine Steuerung, die den Drahtantrieb steuert,
**dadurch gekennzeichnet, dass** die Steuerung so konfiguriert ist, dass sie das Verfahren eines der vorhergehenden Verfahrensansprüche 1 bis 16 ausführt und/oder den Speicher von Anspruch 17 aufweist und/oder die Steuerung von Anspruchs 18 ist.

## Revendications

1. Procédé pour faire fonctionner une ou plusieurs scies à fil, chacune comportant un fil destiné à couper une pièce à usiner et un entraînement de fil destiné à mettre en mouvement au moins une section du fil par rapport à la pièce à usiner, **caractérisé en ce que** le procédé comprend les étapes consistant à :
(a) attribuer une puissance maximale réduite *P_{i,max}* à au moins l'une des scies à fil,
(b) faire fonctionner au moins ladite au moins une des scies à fil de telle sorte que la puissance *Pᵢ*(*t*) fournie à son entraînement de fil ne remplace pas sa puissance maximale réduite attribuée, c'est-à-dire que la condition *Pᵢ*(*t*) ≤ *P_{i,max}*∀*t* soit respectée durant le contrôle de la *i^{e}* scie à fil.

2. Procédé selon la revendication 1, dans lequel, à l'étape (b), le mouvement des une et/ou plusieurs des fils est commandé entre autres pour délimiter la puissance maximale de l'entraînement de la scie à fil respective, de préférence en contrôlant la vitesse et/ou l'accélération du fil.

3. Procédé selon la revendication 1 ou 2, comprenant en outre l'étape, de préférence avant l'étape (a), consistant à :
définir une puissance totale maximale *P_{tot,max}* qui peut être utilisée et choisir la somme totale de toutes les scies à fil de sorte qu'elle reste en dessous de cette puissance totale maximale, c'est-à-dire *ΣᵢPᵢ*(*t*) ≤ *P_{tot,max},* de préférence ∀*t*.

4. Procédé selon l'une des revendications précédentes, **caractérisé en ce que** le procédé comprend en outre au moins l'une des étapes suivantes :
(i) une étape d'accélération (10) d'une durée *Tₐ* débutant à *t*₀ et se terminant à *tₐ* comprenant : l'alimentation de l'entraînement de fil avec une puissance *P*(*t*) pour accélérer au moins une section du fil avec une accélération *a*(*t*) dans une direction axiale du fil et par rapport à la pièce à usiner, dans lequel *t* symbolise le temps,
(ii) une étape de fonctionnement normal (20) d'une durée *Tₙ,* comprenant : le maintien d'une vitesse axiale *vₙ* d'au moins la section du fil constante au sein d'une marge d'erreur donnée de ±*ε · vₙ,* dans lequel *ε* ∈ { 0.5; 0.1; 0.05; 0.025; 0.01}, et
(iii) une étape d'arrêt (30) d'une durée *Tₛ,* comprenant : le ralentissement d'au moins la section du fil jusqu'à ce qu'au moins la section du fil stoppe,
dans lequel :
durant l'étape d'accélération, pendant au moins un intervalle de temps *T_{d}* débutant à *t*_{*d*₁} et se terminant à *t*_{*d*₂} :
la valeur absolue de l'accélération |*a*(*t*)| est diminuée au moins une fois, c'est-à-dire de telle sorte que |*a*(*t*₁)| > |*a*(*t*₂)|, et/ou
la puissance *P(t)* est diminuée au moins une fois et/ou gardée constante, c'est-à-dire *P*(*t*₂) ≤ *P*(*t*₁),
et dans lequel, dans les deux cas *t*₁ est plus petit que *t*₂ et dans lequel *t*₁ et *t*₂ se situent entre *tₐ,* et *t_{d2'}* c'est-à-dire *t*_{*d*₁} ≤ *t*₁ *< t*₂ ≤ *t*_{*d*₂}.

5. Procédé selon la revendication 4, comprenant en outre :
(iv) la répétition (40) de l'étape d'accélération (10) au moins une fois après l'exécution de l'étape d'arrêt (30), dans lequel le signe de l'accélération est inversé en comparaison à l'accélération de l'étape d'accélération antérieure (i).

6. Procédé selon la revendication 4 ou 5, **caractérisé en ce que** l'intervalle de temps *T_{d}* est supérieur ou égal à $\frac{1}{10}$ de *Tₐ*, c'est-à-dire $\frac{1}{10} ⋅ {T}_{a} \leq {T}_{d} \leq {T}_{a}$.

7. Procédé selon l'une des revendications précédentes, **caractérisé en ce que** la puissance *Pᵢ*(*t*) de l'entraînement destiné à mettre en mouvement le fil durant l'étape d'accélération est contrôlée de manière à satisfaire *Pᵢ*(*t*₂)≤ *Pᵢ*(*t*₁), pour tout *t*₁ < *t*₂·

8. Procédé selon l'une des revendications 4 à 7, **caractérisé en ce que** l'étape d'accélération (10) comprend au moins une première sous-étape (11), dans lequel, durant la première sous-étape (11), l'accélération *a(t)* du fil est déterminée et basée sur l'accélération déterminée *a(t),* la puissance *Pᵢ*(*t*) fournie à l'entraînement de fil
a. est contrôlée de manière à maintenir l'accélération *a(t)* à une valeur prédéterminée donnée *a_{pd}*(*t*) au sein d'une marge d'erreur de 25 % ou moins, et/ou
b. est augmentée en fonction du temps *t*, et/ou
c. est maintenue au moins essentiellement constante au sein d'une marge d'erreur de 25 % ou moins.

9. Procédé selon la revendication précédente, **caractérisé en ce que** la première sous-étape (11) prend fin après une durée donnée et/ou si la puissance *Pᵢ*(*t*) atteint un seuil de puissance *P_{i,t,n}*(*t*) et/ou si la vitesse a atteint un seuil de vitesse, dans lequel *n* indique le nombre de fois où la première sous-étape (11) est exécutée.

10. Procédé selon la revendication précédente, **caractérisé en ce que** si le seuil de puissance *P_{t,n}*(*t*) a été atteint, une deuxième sous-étape (12) est exécutée,
dans lequel, au cours de la deuxième sous-étape (12), la puissance *P(t)* est diminuée d'une valeur Δ*Pₙ* en comparaison à la puissance *P(t)* à la fin de la première sous-étape (11) précédente,
et dans lequel *n* indique le nombre de fois où la deuxième sous-étape (12) est exécutée, et **en ce que** le procédé se poursuit avec la première sous-étape (11) telle que définie dans la revendication 8.

11. Procédé selon l'une des revendications 4 à 10, **caractérisé en ce que** l'étape d'accélération comprend au moins deux sous-étapes (11, 12, 13) et **en ce que**, durant une deuxième sous-étape (12), l'entraînement de fil est contrôlé de manière à maintenir la puissance *P*(*t*) fournie à l'entraînement de fil à une valeur seuil (*Pₜ*(*t*)) ou en dessous, c'est-à-dire *P*(*t*) ≤ *P_{c}*(*t*)∀*t* E [*t*₀, *tₐ*],

12. Procédé selon la revendication précédente, **caractérisé en ce que**, au moins l'une des sous-étapes (11, 12, 13), la puissance *P*(*t*) fournie à l'entraînement de fil est déterminée et l'accélération *a*(*t*) du fil est contrôlée sur la base de la puissance déterminée *P*(*t*), c'est-à-dire *a*(*t*) *= a*(*P*(*t*)) durant la deuxième sous-étape.

13. Procédé selon la revendication 11 ou 12 précédente, **caractérisé en ce qu'**au début *t*_{*a*21} de la deuxième sous-étape (12), la puissance *P*(*t*_{*a*21}) est supérieure à la puissance *P*(*t*_{*a*22}) à la fin *t*_{*a*22} de la deuxième sous-étape (12), c'est-à-dire *P*(*t*_{*a*21}) > *P*(*t*_{*a*22}).

14. Procédé selon la revendication précédente, **caractérisé en ce que** : $P \left({t}_{a 22}\right) = \left(1\pm β\right) P \left(υ\left({t}_{a 21}\right)\right) ,$ dans lequel $β ∈ \left\{0,5;0.25; 0.2; 0.1; 0.05; 0.025; 0.01\right\} .$

15. Procédé selon l'une des revendications 4 à 14, **caractérisé en ce que**, durant l'étape d'accélération (10), l'accélération est maintenue à une première valeur pendant une première durée *T*₁ et ensuite maintenue à une deuxième valeur pendant une deuxième durée *T*₂, dans lequel la deuxième valeur est inférieure à la première valeur.

16. Procédé selon l'une des revendications précédentes, **caractérisé en ce qu'**il comprend le contrôle d'au moins deux scies à fil selon l'un des procédés d'au moins l'une des revendications précédentes, c'est-à-dire 1 ≤ *i* ≤ *N* et 2 ≤*N,*
dans lequel *N* désigne le nombre de scies à fil contrôlées selon le procédé.

17. Mémoire tangible comprenant des instructions de programme qui, lorsqu'elles sont exécutées par un contrôleur, amènent le contrôleur à exécuter le procédé de l'une des revendications précédentes.

18. Contrôleur, configuré pour exécuter le procédé de l'une des revendications de procédé 1 à 16 précédentes et/ou comprenant la mémoire de la revendication 17.

19. Scie à fil configurée pour couper une pièce à usiner, comprenant au moins :
- un support de pièce à usiner,
- un entraînement de fil configuré pour entraîner au moins une section du fil par rapport au support de pièce à usiner selon un mouvement de va-et-vient, et
- un contrôleur contrôlant l'entraînement de fil,
**caractérisée en ce que** le contrôleur est configuré pour exécuter le procédé de l'une des revendications de procédé 1 à 16 précédentes et/ou comprend la mémoire de la revendication 17 et/ou est le contrôleur de la revendication 18.
